Europäisches Patentamt

(19) European Patent Office

Office européen des brevets

(11) Numéro de publication : **0 338 880 B1**

(12) **FASCICULE DE BREVET EUROPEEN**

(45) Date de publication du fascicule du brevet :
04.12.91 Bulletin 91/49

(51) Int. Cl.⁵ : **F16L 33/22**

(21) Numéro de dépôt : **89400889.5**

(22) Date de dépôt : **30.03.89**

(54) **Dispositif de jonction entre un raccord souple et un embout tubulaire rigide d'un circuit contenant un fluide sous pression.**

(30) Priorité : 21.04.88 FR 8805305

(43) Date de publication de la demande :
25.10.89 Bulletin 89/43

(45) Mention de la délivrance du brevet :
04.12.91 Bulletin 91/49

(84) Etats contractants désignés :
**DE GB IT**

(56) Documents cités :
**CH-A- 455 417
DE-A- 1 775 504
DE-A- 2 302 639
DE-U- 1 880 527
FR-A- 1 073 572
FR-E- 70 353
US-A- 2 386 109**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Liochon, Michel
1 Résidence le Nouveau Parc
F-78570 Andrésy (FR)**
Inventeur : **Arribard, Philippe
50 Allée des Mésanges
F-78540 Vernouillet (FR)**
Inventeur : **Massoutier, Pascal
19 Sente des Buis
F-78780 Maurecourt (FR)**

(74) Mandataire : **Bouget, Lucien et al
Cabinet Lavoix 2, Place d'Estienne d'Orves
F-75441 Paris Cédex 09 (FR)**

## Description

L'invention concerne un dispositif de jonction entre un raccord tubulaire souple et un embout tubulaire rigide, dans un circuit contenant en service un fluide sous pression.

Les véhicules automobiles modernes comportent un capot de plus en plus effilé en vue de l'amélioration du $C_X$ du véhicule. La place disponible sous le capot pour le radiateur est donc réduite par rapport aux véhicules plus anciens. L'eau du circuit de refroidissement est donc relativement moins refroidie sur les véhicules modernes. Cette eau se trouve, pendant la marche du véhicule, à une pression et à une température assez sensiblement supérieure à la pression et à la température de l'eau dans les circuits de refroidissement des véhicules plus anciens.

Cette augmentation de pression entraîne des risques de fuite, dans le circuit de refroidissement du véhicule, au niveau des jonctions entre les conduits de raccordement souples du circuit et les embouts de raccordement rigides, par exemple du radiateur ou du moteur.

Jusqu'ici, les conduits de raccordement ou raccords souples étaient engagés sur l'embout rigide correspondant et fixés de manière étanche sur cet embout grâce à un collier de serrage placé autour du raccord souple.

Les colliers de serrage utilisés peuvent être de types différents.

On utilise par exemple des colliers élastiques mais ces colliers n'assurent pas une très bonne étanchéité lorsque la pression dans le circuit de refroidissement est sensiblement supérieure à la pression atmosphérique. De plus, ces colliers élastiques nécessitent l'utilisation d'outils spécifiques pour leur montage et leur démontage.

On peut également utiliser des colliers de serrage à double crémaillère mais ces colliers demandant également l'utilisation d'un outillage spécifique pour leur montage et leur démontage. De plus, le démontage de tels colliers est une opération très difficile.

Il est également possible d'utiliser des colliers à vis à direction tangentielle mais ces colliers sont très difficiles à placer correctement sur le raccord et l'embout. De plus, le serrage de ces colliers ne peut pas être contrôlé visuellement.

Les dispositifs de jonction des circuits de refroidissement où les raccords souples sont enfilés sur les embouts rigides du circuit et serrés par des colliers ne donnent donc pas satisfaction dans les conditions actuelles et a fortiori dans le cas de circuits de refroidissement fonctionnant sous haute pression. De plus, ces dispositifs ne peuvent pas être montés de façon automatique.

On connaît, par le CH-A-455.417, un raccord souple comportant deux lèvres dont l'une est engagée à l'intérieur d'un conduit rigide et l'autre à l'extérieur du conduit. Une bague de serrage de la lèvre extérieure assure la fixation du raccord. La lèvre intérieure du raccord assure une certaine étanchéité du raccord en cas de rupture de la lèvre extérieure. Ce type de raccord n'apporte cependant pas une solution satisfaisante dans le cas d'un circuit renfermant un liquide sous pression, tel qu'un circuit de refroidissement d'un véhicule automobile.

Le but de l'invention est donc de proposer un dispositif de jonction entre un raccord tubulaire souple et un embout tubulaire rigide dans un circuit contenant en service un fluide sous pression, constitué par une partie d'extrémité du raccord souple introduite à l'intérieur de l'embout rigide, la paroi du raccord souple soumise en service à la pression du fluide sur sa surface interne étant en contact étanche, par sa surface externe, avec la surface intérieure de l'embout rigide, ce dispositif assurant une fixation étanche du raccord souple sur l'embout tout en étant d'une structure simple et ne nécessitant pas d'opération de montage complexe.

Dans ce but, le raccord tubulaire rigide est usiné sur sa surface intérieure pour constituer une saillie radiale annulaire saillante vers l'intérieur pour assurer la retenue axiale du raccord souple dans l'embout rigide par déformation radiale vers l'intérieur du raccord souple.

D'autres modes de réalisation permettent d'obtenir les même avantages et sont également revendiqués dans les revendications 2, 5, 6, 7, 8 et 9 annexées.

Afin de bien faire comprendre l'invention, on va maintenant décrire à titre d'exemple non limitatif, en se référant aux figures jointes en annexe, plusieurs modes de réalisation d'un dispositif de jonction suivant l'invention utilisé pour relier un raccord souple d'un circuit de refroidissement d'un véhicule automobile à un embout rigide de ce circuit.

La figure 1 est une demi-vue en coupe d'un dispositif de jonction suivant l'invention et suivant un premier mode de réalisation.

La figure 2 est une demi-vue en coupe d'un dispositif suivant l'invention et suivant un second mode de réalisation.

La figure 3 est une demi-vue en coupe d'un dispositif suivant l'invention et suivant un troisième mode de réalisation.

La figure 4 est une demi-vue en coupe d'un dispositif de jonction suivant l'invention et suivant un quatrième mode de réalisation.

Les figures 4A et 4B sont des vues suivant A et suivant B respectivement de la figure 4.

La figure 5 est une demi-vue en coupe axiale d'un dispositif suivant l'invention et suivant un cinquième mode de réalisation.

La figure 6 est une demi-vue en coupe d'un dispositif suivant l'invention et suivant un sixième mode de réalisation.

La figure 7 est une demi-vue en coupe d'un dispositif suivant l'invention et suivant un septième mode de réalisation.

La figure 8 est une demi-vue en coupe d'un dispositif suivant l'invention et suivant un huitième mode de réalisation.

La figure 8A est une vue suivant A de la figure 8.

La figure 9 est une vue en coupe d'un dispositif suivant l'invention et suivant un neuvième mode de réalisation.

La figure 9A est une vue suivant A de la figure 9.

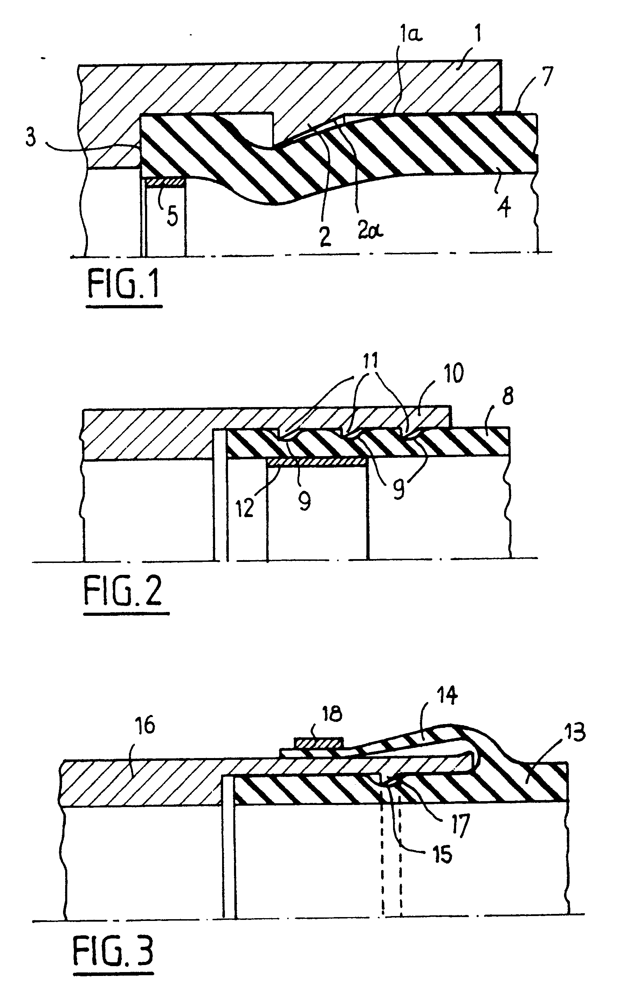

Sur la figure 1, on voit une partie d'extrémité d'un embout tubulaire rigide 1 qui peut être par exemple solidaire du radiateur ou du moteur d'un véhicule automobile. Cet embout 1 est usiné intérieurement, dans sa partie d'extrémité, de façon à réaliser un logement annulaire terminé par un épaulement 3, dans l'épaisseur de la paroi de l'embout. L'usinage intérieur de l'embout permet également de ménager une partie de forme annulaire 2 en saillie radiale à l'intérieur du logement annulaire. Cette partie 2 en saillie radiale est délimitée par un épaulement radial et par une surface tronconique 2a dirigée vers l'extrémité ouverte de l'embout 1.

La partie d'extrémité d'un raccord souple 4, par exemple en caoutchouc, est introduite dans le logement annulaire de l'embout 1, jusqu'au moment où son extrémité vient en appui sur l'épaulement 3. Au cours de son passage dans le logement de l'embout 1, le raccord souple 4 se déforme dans la direction radiale et vers l'intérieur, ce qui permet son passage au niveau de la partie en saillie 2. Lorsque le raccord souple 4 est en place, sa partie située au niveau de la saillie 2 est déformée dans la direction radiale et vers l'intérieur, ce qui permet une certaine retenue et un certain maintien du raccord souple à l'intérieur de l'embout rigide 1. De plus, un anneau élastique 5 qui peut être constitué par une bague métallique fendue est placée à l'intérieur du raccord souple 4, à son extrémité. L'anneau 5 permet d'éviter un affaissement du raccord et de garantir un certain maintien de ce raccord souple 4 à l'intérieur de l'embout rigide 1, en l'absence de pression dans le circuit de refroidissement.

Lorsque du fluide à haute température et sous pression remplit le circuit de refroidissement, la surpression intérieure du raccord souple 4 provoque une déformation du raccord souple 4 vers l'extérieur dans la direction radiale, si bien que la surface externe du raccord souple 4 est appliquée contre la surface intérieure de l'embout rigide 1.

L'étanchéité entre le raccord 4 et l'embout rigide 1 est assurée suivant la surface tronconique 2a et suivant la surface cylindrique 1a constituant la partie d'entrée de l'alésage de l'embout rigide 1, la surface externe du raccord souple 4 étant mise en contact étanche et plaquée contre ces surfaces, par la surpression du fluide contenu dans le raccord souple.

Un repère de positionnement 7 qui peut être constitué par exemple par une trace de peinture sur la partie du raccord souple 4 venant se placer en concordance avec l'extrémité de l'embout rigide 1 permet de vérifier la mise en place correcte du raccord souple 4 à l'intérieur de l'embout rigide 1 au montage.

L'étanchéité de la jonction augmente avec la pression d'application du raccord souple sur la surface intérieure de l'embout, c'est-à-dire avec la pression du fluide de refroidissement dans le circuit.

Sur la figure 2, on voit une variante de réalisation d'un dispositif de jonction suivant l'invention, l'extrémité du raccord souple 8 engagée dans la partie d'extrémité de l'embout rigide 10 comportant des parties en creux 9 de forme annulaire et l'embout rigide 10 comportant sur sa surface intérieure des parties en saillie annulaires 10 venant se placer à l'intérieur des cavités annulaires 9, lors de l'engagement du raccord souple 8 dans l'embout rigide 10.

Un anneau élastique 12 de maintien du raccord souple 8 est engagé dans la partie d'extrémité du raccord souple 8.

Le dispositif de jonction représenté sur la figure 2 permet d'éviter tout déplacement axial du raccord souple 8 à l'intérieur de l'embout rigide 10, après sa mise en place, même dans le cas où le circuit de refroidissement et le volume intérieur du raccord souple 8 ne sont pas sous pression.

La mise en pression du circuit de refroidissement permet d'appliquer la surface externe de la paroi du raccord souple 8 contre la surface intérieure de l'embout rigide 10, ce qui permet d'obtenir une bonne étanchéité de la jonction.

Sur la figure 3, on a représenté une seconde variante d'un dispositif de jonction suivant l'invention, le raccord souple 13 comportant une jupe externe 14 coaxiale à la partie tubulaire du raccord 13, venue de matière et dirigée vers l'extrémité du raccord. Le raccord 13 comporte de plus une cavité annulaire 15 dans laquelle vient s'engager une partie 17 de l'embout rigide 16 de forme annulaire et usinée en saillie sur la surface intérieure de cet embout 16. On assure ainsi la mise en place et la retenue axiale du raccord 13 à l'intérieur de l'embout rigide 16, après sa mise en place. La fixation du raccord 13 est complétée par un collier 18 assurant le serrage de la jupe 14 contre la surface extérieure de l'embout rigide 16. Le raccord souple 13 est ainsi maintenu en position sur l'embout rigide 16, même en l'absence de pression dans le circuit de refroidissement. La pression du fluide de refroidissement s'exerçant à l'intérieur du raccord souple 13 permet d'exercer une pression sur la paroi du raccord dont la surface externe vient s'appliquer de manière étanche sur la surface intérieure de l'embout rigide 16.

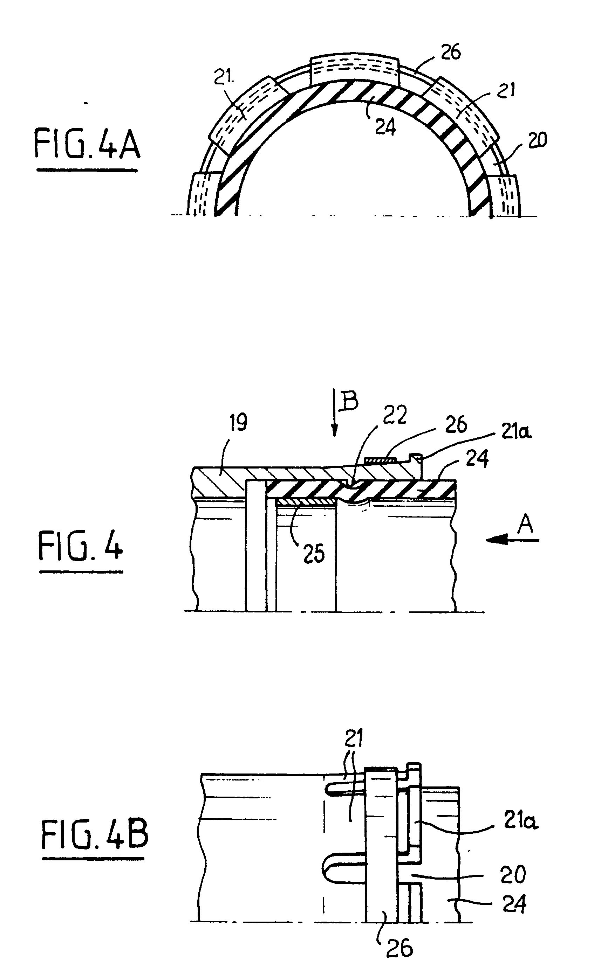

Sur les figures 4, 4A et 4B, on a représenté une variante de réalisation du dispositif de jonction, l'extrémité de l'embout rigide 19 comportant des fentes 20 délimitant des languettes 21 déformables élastiquement par flexion. L'embout rigide 19 comporte également une partie 22 de forme annulaire en saillie radiale vers l'intérieur assurant la retenue du raccord souple 24 lorsque celui-ci est introduit dans l'embout rigide 19, par déformation radiale. Le raccord souple 24 comporte également un anneau élastique de maintien 25 qui peut être constitué par une bague fendue introduite dans sa partie d'extrémité.

Une bague coulissante de serrage 26 est enfilée sur la surface externe de l'embout rigide 19 et peut venir dans une position de serrage, comme représenté sur les figures 4 et 4B dans laquelle la bague 26 assure le rabattement des languettes 21 vers l'intérieur et la déformation du raccord souple 24 par l'intermédiaire des parties en saillie 26 des languettes 21.

La bague coulissante 26 peut être déplacée par coulissement entre sa position de serrage et une position où la bague 26 n'est plus en contact avec les languettes 21. Dans cette seconde position de la bague 26, les languettes 21 sont écartées vers l'extérieur dans des directions radiales et ménagent à leur partie centrale un passage permettant d'introduire l'extrémité du raccord souple 24 sans difficulté.

Lorsque la partie d'extrémité du raccord souple 24 a été engagée dans l'embout rigide 19 sur une longueur suffisante, on amène la bague 26 dans sa position de serrage par coulissement, comme représenté sur les figures 4 et 4B.

L'embout tubulaire 19 constitue à sa partie d'extrémité un logement annulaire pour l'extrémité du raccord souple 24, sur une longueur correspondant aux languettes 21 et à une zone non fendue de l'embout rigide 19 située dans le prolongement des languettes 21. L'étanchéité de la jonction est assurée par mise en contact de l'extrémité du raccord souple 24 avec cette zone non fendue de l'embout rigide 19, sous l'effet de la pression du fluide de refroidissement dans le circuit.

Chacune des languettes 21 comporte un rebord 21a saillant vers l'extérieur permettant d'éviter la sortie de la bague coulissante 26 par l'extrémité de l'embout rigide 19.

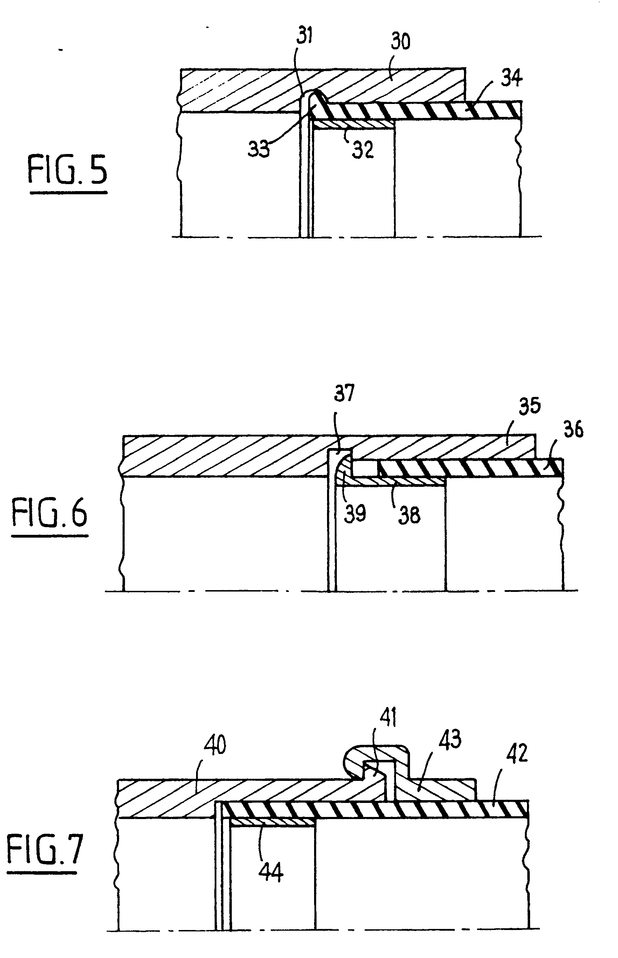

Le dispositif de jonction représenté sur la figure 5 comporte un embout tubulaire rigide 30 ayant une cavité torique 31 usinée sur sa surface intérieure.

La partie d'extrémité du raccord souple 34 comporte un bourrelet 33 de forme torique venant s'engager dans la cavité annulaire 31, lors de la mise en place du raccord souple 34 dans l'embout rigide 30. Un anneau élastique 32 est engagé à l'intérieur du raccord souple 34, à son extrémité.

Le bourrelet torique 33 assure la retenue axiale du raccord souple 34 dans l'embout rigide 30.

L'étanchéité de la jonction est assurée, lors de la mise en pression du circuit, par l'application de la surface externe de la paroi du raccord souple 34 sur la surface intérieure de l'embout rigide 30.

Sur la figure 6, on a représenté l'extrémité d'un embout rigide 35 usiné intérieurement pour recevoir la partie d'extrémité du raccord souple 36 et pour constituer une cavité annulaire de retenue axiale du raccord souple 36.

Le raccord souple 36 est solidaire à son extrémité d'un anneau 38 ayant une partie d'extrémité 39 en saillie radiale vers l'extérieur, par rapport à l'anneau 38 et par rapport au raccord souple 36. L'anneau 38 est fixé à l'intérieur du raccord souple 36, par collage ou par sertissage.

Lorsque le raccord souple 36 est introduit à l'intérieur de l'embout rigide 35 comme représenté sur la figure 6, la partie en saillie 39 vient se placer à l'intérieur de la cavité annulaire 37 et assure ainsi la retenue axiale du raccord souple 36 à l'intérieur de l'embout rigide 35. L'anneau 38 permet de plus de maintenir l'extrémité du raccord souple 36 non déformée en l'absence de pression, à l'intérieur du circuit de refroidissement.

Comme précédemment, l'étanchéité de la jonction est assurée par la mise en contact sous l'effet de la pression interne de la surface externe de la paroi du raccord souple 36 avec la surface intérieure de l'embout rigide 35.

Sur la figure 7, on voit un embout rigide 40 comportant une partie d'extrémité en saillie radiale vers l'extérieur 41 permettant l'accrochage et la retenue d'un raccord souple 42 engagée à l'intérieur de l'embout rigide, par l'intermédiaire d'une pièce annulaire d'accrochage 43. La pièce 43 est fixée sur la surface extérieure du raccord souple 42, par collage ou par sertissage.

Un anneau élastique 44 fixé à l'intérieur du raccord souple 42 permet d'éviter la déformation du raccord souple 42 par affaissement radial, lorsque le circuit de refroidissement n'est pas sous pression.

Lorsque le circuit est en service et rempli de fluide sous pression, l'étanchéité de la jonction est assurée par mise en contact sous pression de la surface externe de la paroi du raccord souple 42 avec la surface intérieure de l'embout rigide 40.

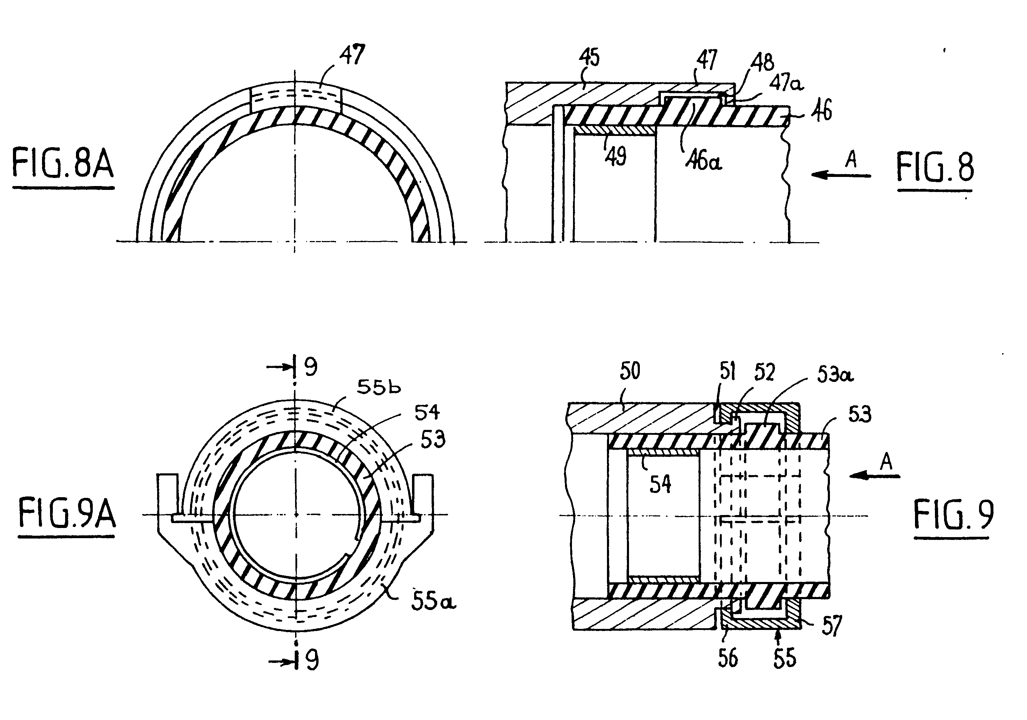

Sur les figures 8 et 8A, on voit un embout tubulaire rigide 45 usiné intérieurement pour délimiter un logement annulaire dans lequel vient se placer le raccord souple 46. L'embout rigide 45 comporte de plus à son extrémité un prolongement 47 délimitant une cavité 48 fermée par un rebord 47a.

Le raccord souple 46 comporte une partie en saillie radiale de forme annulaire venue de matière 46a destinée à s'engager au montage dans la cavité 48. On assure ainsi la retenue axiale du raccord souple 46 dans l'embout rigide 45. Un anneau élastique 49 placé à l'intérieur du raccord souple 46 évite la déformation de l'extrémité du raccord souple 46, en l'absence de pression dans le circuit de refroidissement.

Sur les figures 9 et 9A, on voit un embout tubulaire rigide 50 usiné extérieurement pour constituer une cavité 51 de forme annulaire délimitée par un rebord 52. Le raccord souple 53 comporte une partie en saillie radiale vers l'extérieur 53a venue de matière dont le diamètre est supérieur au diamètre intérieur de l'embout rigide 50.

Un anneau élastique 54 constitué par une bague fendue est engagé dans la partie d'extrémité du raccord souple 53 dont elle évite la déformation en l'absence de pression.

Le montage du raccord souple 53 sur l'embout rigide 50 est assuré en engageant l'extrémité du raccord souple 53 dans l'embout rigide 50, comme représenté sur la figure 9.

Le maintien axial du raccord souple 53 dans l'embout rigide 50 est assuré grâce à une bague 55 en deux parties 55a et 55b clipées l'une sur l'autre par leurs extrémités comportant des éléments d'assemblage complémentaires.

Le profil transversal en forme de cavalier de la bague 55 visible sur la figure 9 permet d'assurer la retenue axiale du raccord souple 53 par rapport à l'embout rigide 50. La bague 55 comporte des rebords 56 et 57 de direction radiale et dirigés vers l'intérieur.

Après engagement du raccord souple 53 dans l'embout rigide 50, les deux parties 55a et 55b de la bague 55 sont engagées latéralement sur l'embout rigide et sur le raccord souple, de façon que le rebord 56 soit engagé dans la cavité 51 fermée par le rebord 52. La bague 55 est assemblée par clipage, la partie en saillie 53a du raccord souple 53 étant disposée à l'intérieur de la bague 55 et maintenue en position axiale par le rebord 57.

L'étanchéité de la jonction est assurée par la pression du fluide à l'intérieur du raccord souple comme précédemment.

Dans tous les cas, la jonction du conduit souple et de l'embout rigide est réalisée de manière simple par engagement du raccord souple à l'intérieur de l'embout rigide. Cet engagement peut être réalisé en force ou par simple glissement, un élément de verrouillage axial du raccord souple étant ensuite mis en place. L'étanchéité qui est assurée grâce à la mise en pression du fluide dans le circuit est d'autant meilleure que la pression du fluide est plus élevée.

L'invention ne se limite pas aux modes de réalisation qui ont été décrits.

On peut imaginer d'autres moyens de maintien axial du raccord souple à l'intérieur de l'embout rigide, que ces moyens soient usinés dans l'embout rigide, incorporés à cet embout ou constitués par des pièces indépendantes de l'embout.

De même, le raccord souple pourra comporter des parties correspondantes d'accrochage creuses ou en saillie d'une forme quelconque.

Enfin, l'invention s'applique à tout circuit destiné à recevoir en service un fluide sous pression et comportant des raccords souples, par exemple en caoutchouc, qui sont assemblés à des embouts rigides tubulaires.

**Revendications**

1. Dispositif de jonction entre un raccord tubulaire souple (4, 8, 13, 24, 34, 36, 42, 46, 53) et un embout tubulaire rigide (1, 10, 16, 19, 30, 35, 40, 45, 50) dans un circuit contenant en service un fluide sous pression, constitué par une partie d'extrémité du raccord souple (4, 8, 13, 24, 34, 36, 42, 46, 53) introduite à l'intérieur de l'embout rigide (1, 10, 16, 19, 30, 35, 40, 45, 50), la paroi du raccord souple soumise en service à la pression du fluide sur sa surface interne étant en contact étanche, par sa surface externe, avec la surface intérieure de l'embout rigide, caractérisé par le fait que le raccord tubulaire rigide (1) est usiné sur sa surface intérieure pour constituer une saillie radiale annulaire (2) saillante vers l'intérieur pour assurer la retenue axiale du raccord souple (4) dans l'embout rigide (1) par déformation radiale vers l'intérieur du raccord souple (4).

2. Dispositif de jonction entre un raccord tubulaire souple (4, 8, 13, 24, 34, 36, 42, 46, 53) et un embout tubulaire rigide (1, 10, 16, 19, 30, 35, 40, 45, 50) dans un circuit contenant en service un fluide sous pression, constitué par une partie d'extrémité du raccord souple (4, 8, 13, 24, 34, 36, 42, 46, 53) introduite à l'intérieur de l'embout rigide (1, 10, 16, 19, 30, 35, 40, 45, 50), la paroi du raccord souple soumise en service à la pression du fluide sur sa surface interne étant en contact étanche, par sa surface externe, avec la surface intérieure de l'embout rigide, caractérisé par le fait que l'embout rigide (10) est usiné sur sa surface intérieure pour constituer au moins une saillie annulaire radiale (11) destinée à s'engager dans une cavité annulaire (9) de forme correspondante dans la paroi du raccord souple, pour assurer sa retenue axiale.

3. Dispositif selon l'une quelconque des revendications 1 et 2, caractérisé par le fait que le raccord souple (13) comporte une jupe coaxiale (14) entourant le raccord souple destinée à venir se placer autour de l'embout rigide (16) sur lequel la jupe (14) est fixée par un collier de serrage (18).

4. Dispositif selon l'une quelconque des revendications 1 et 2, caractérisé par le fait que l'embout rigide (19) comporte une partie d'extrémité constituée par des languettes (21) déformables en flexion comportant intérieurement des crans de blocage (22) et une bague coulissante (26) déplaçable entre une position de serrage radial des languettes (21) et une position de libération des languettes qui sont alors écartées les unes par rapport aux autres, pour permettre l'introduction du raccord souple (24) dans l'embout rigide (19).

5. Dispositif de jonction entre un raccord tubulaire souple (4, 8, 13, 24, 34, 36, 42, 46, 53) et un embout tubulaire rigide (1, 10, 16, 19, 30, 35, 40, 45, 50) dans un circuit contenant en service un fluide sous pression, constitué par une partie d'extrémité du raccord souple (4, 8, 13, 24, 34, 36, 42, 46, 53) introduite à l'intérieur de l'embout rigide (1, 10, 16, 19, 30, 35, 40, 45, 50), la paroi du raccord souple soumise en service à la pression du fluide sur sa surface interne étant en contact étanche, par sa surface externe, avec la surface intérieure de l'embout rigide, caractérisé par le fait que l'embout rigide (30) est usiné sur sa surface intérieure pour constituer une cavité annulaire (31) et que le raccord souple (34) comporte un bourrelet torique (33) engagé dans la cavité annulaire (31) pour assurer sa retenue axiale.

6. Dispositif de jonction entre un raccord tubulaire souple (4, 8, 13, 24, 34, 36, 42, 46, 53) et un embout tubulaire rigide (1, 10, 16, 19, 30, 35, 40, 45, 50) dans un circuit contenant en service un fluide sous pression, constitué par une partie d'extrémité du raccord souple (4, 8, 13, 24, 34, 36, 42, 46, 53) introduite à l'intérieur de l'embout rigide (1, 10, 16, 19, 30, 35, 40, 45, 50), la paroi du raccord souple soumise en service à la pression du fluide sur sa surface interne étant en contact étanche, par sa surface externe, avec la surface intérieure de l'embout rigide, caractérisé par le fait que l'embout rigide (35) est usiné sur sa surface intérieure pour constituer une cavité annulaire (37) et que le raccord souple (36) est solidaire à son extrémité d'un anneau (38) comportant une partie d'extrémité (39) en saillie radiale engagée dans la cavité annulaire (37) pour assurer la retenue axiale du raccord souple (36).

7. Dispositif de jonction entre un raccord tubulaire souple (4, 8, 13, 24, 34, 36, 42, 46, 53) et un embout tubulaire rigide (1, 10, 16, 19, 30, 35, 40, 45, 50) dans un circuit contenant en service un fluide sous pression, constitué par une partie d'extrémité du raccord souple (4, 8, 13, 24, 34, 36, 42, 46, 53) introduite à l'intérieur de l'embout rigide (1, 10, 16, 19, 30, 35, 40, 45, 50), la paroi du raccord souple soumise en service à la pression du fluide sur sa surface interne étant en contact étanche, par sa surface externe, avec la surface intérieure de l'embout rigide, caractérisé par le fait que l'embout rigide (40) comporte sur sa surface extérieure, une partie d'extrémité (41) en saillie radiale vers l'extérieur et que le raccord souple (42) est solidaire sur sa surface extérieure d'une pièce annulaire d'accrochage (43) coopérant avec la partie en saillie (41) pour assurer la retenue axiale du raccord souple (42).

8. Dispositif de jonction entre un raccord tubulaire souple (4, 8, 13, 24, 34, 36, 42, 46, 53) et un embout tubulaire rigide (1, 10, 16, 19, 30, 35, 40, 45, 50) dans un circuit contenant en service un fluide sous pression, constitué par une partie d'extrémité du raccord souple (4, 8, 13, 24, 34, 36, 42, 46, 53) introduite à l'intérieur de l'embout rigide (1, 10, 16, 19, 30, 35, 40, 45, 50), la paroi du raccord souple soumise en service à la pression du fluide sur sa surface interne étant en contact étanche, par sa surface externe, avec la surface intérieure de l'embout rigide, caractérisé par le fait que l'embout rigide (45) comporte à son extrémité un prolongement de direction axiale (47) comportant un rebord radial (47a) dirigé vers l'intérieur et que le raccord souple (46) comporte une partie (46a) en saillie radiale coopérant avec le rebord (47a) pour assurer la retenue axiale du raccord souple (46).

9. Dispositif de jonction entre un raccord tubulaire souple (4, 8, 13, 24, 34, 36, 42, 46, 53) et un embout tubulaire rigide (1, 10, 16, 19, 30, 35, 40, 45, 50) dans un circuit contenant en service un fluide sous pression, constitué par une partie d'extrémité du raccord souple (4, 8, 13, 24, 34, 36, 42, 46, 53) introduite à l'intérieur de l'embout rigide (1, 10, 16, 19, 30, 35, 40, 45, 50), la paroi du raccord souple soumise en service à la pression du fluide sur sa surface interne étant en contact étanche, par sa surface externe, avec la surface intérieure de l'embout rigide, caractérisé par le fait que l'embout rigide (50) est usiné extérieurement pour constituer une cavité annulaire (51) délimitée par un rebord radial (52), que le raccord souple (53) comporte une partie (53a) en saillie radiale vers l'extérieur et qu'une bague profilée en forme de cavalier (55) en deux parties assemblées par clippage est engagée dans la cavité (51) et recouvre la partie (53a) du raccord souple (53) pour assurer sa retenue axiale.

10. Dispositif selon l'une quelconque des revendications 1 à 9, caractérisé par le fait qu'un anneau élastique (5, 12, 25, 32, 38, 44, 49, 54) est engagé à l'intérieur du raccord souple pour éviter sa déformation en l'absence de pression dans le circuit.

## Patentansprüche

1. Verbindungseinrichtung zwischen einem schlauchartigen Verbindungsteil (4, 8, 13, 24, 34, 36, 42, 46, 53) und einem starren Rohrende (1, 10, 16, 19, 30, 35, 40, 45, 50) in einem Kreislauf, der im Betrieb ein unter Druck stehendes Fluid enthält, aufgebaut durch ein Endstück der Schlauchverbindung (4, 8, 13, 24, 34, 36, 42, 46, 53), das in das Innere des starren Endes (1, 10, 16, 19, 30, 35, 40, 45, 50) eingeführt ist, wobei die Wand der Schlauchverbindung, die im Betrieb dem Druck des Fluides auf seiner Innenfläche ausgesetzt ist, über seine Außenfläche im Dichtkontakt mit der Innenfläche des starren Endes ist, dadurch **gekennzeichnet**, daß die starre Rohrverbindung (1) auf seiner Innenfläche bearbeitet ist, um eine radiale ringförmige Auskragung (2) zu bilden, die in das Innere vorspringt, um den axialen Halt der Schlauchverbindung (4) in dem starren Ende (1) durch radiale Deformation zum Innern der Schlauchverbindung (4) hin zu gewährleisten.

2. Verbindungseinrichtung zwischen einem schlauchartigen Verbindungsteil (4, 8, 13, 24, 34, 36, 42, 46, 53) und einem starren Rohrende (1, 10, 16, 19, 30, 35, 40, 45, 50) in einem Kreislauf, der im Betrieb ein unter Druck stehendes Fluid enthält, aufgebaut durch ein Endstück der Schlauchverbindung (4, 8, 13, 24, 34, 36, 42, 46, 53), das in das Innere des starren Endes (1, 10, 16, 19, 30, 35, 40, 45, 50) eingeführt ist, wobei die Wand der Schlauchverbindung, die im Betrieb dem Druck des Fluides auf seiner Innenfläche ausgesetzt ist, über seine Außenfläche im Dichtkontakt mit der Innenfläche des starren Endes ist, dadurch **gekennzeichnet**, daß das feste Ende (10) auf seiner Innenfläche bearbeitet ist, um wenigstens eine radiale ringförmige Auskragung (11) zu bilden, die zum Eingriff in eine ringförmige Vertiefung (9) entsprechender Form in der Wand der Schlauchverbindung ausgelegt ist, um ihren axialen Halt zu gewährleisten.

3. Einrichtung nach Anspruch 1 oder 2, dadurch gekennzeichnet, daß die Schlauchverbindung (13) eine koaxiale Übergangsstruktur (14) aufweist, die die Schlauchverbindung umgibt und dazu ausgelegt ist, um das feste Ende (16) zu liegen zu kommen, auf dem die Übergangsstruktur (14) durch eine Schelle (18) befestigt ist.

4. Einrichtung nach Anspruch 1 oder 2, dadurch gekennzeichnet, daß das feste Ende (19) ein Endstück aufweist, aufgebaut aus biegbaren Laschen (21), welche Innenrasten (22) und einen Gleitring (26), der zwischen einer radialen Festklemmposition der Laschen (21) und einer Freigabeposition der Laschen verlagerbar ist, die daher in bezug aufeinander getrennt sind, aufweist, um das Einführen der Schlauchverbindung (24) in das feste Ende (19) zu ermöglichen.

5. Verbindungseinrichtung zwischen einem schlauchartigen Verbindungsteil (4, 8, 13, 24, 34, 36, 42, 46, 53) und einem starren Rohrende (1, 10, 16, 19, 30, 35, 40, 45, 50) in einem Kreislauf, der im Betrieb ein unter Druck stehendes Fluid enthält, aufgebaut durch ein Endstück der Schlauchverbindung (4, 8, 13, 24, 34, 36, 42, 46, 53), das in das Innere des starren Endes (1, 10, 16, 19, 30, 35, 40, 45, 50) eingeführt ist, wobei die Wand der Schlauchverbindung, die im Betrieb dem Druck des Fluides auf seiner Innenfläche ausgesetzt ist, über seine Außenfläche im Dichtkontakt mit der Innenfläche des starren Endes ist, dadurch **gekennzeichnet**, daß das feste Ende (30) auf seiner Innenfläche bearbeitet ist, um eine ringförmige Vertiefung (31) zu bilden, und daß die Schlauchverbindung (34) eine torische Wulst (33) im Eingriff in die ringförmige Vertiefung (31) aufweist, um ihren axialen Halt zu gewährleisten.

6. Verbindungseinrichtung zwischen einem schlauchartigen Verbindungsteil (4, 8, 13, 24, 34, 36, 42, 46, 53) und einem starren Rohrende (1, 10, 16, 19, 30, 35, 40, 45, 50) in einem Kreislauf, der im Betrieb ein unter Druck stehendes Fluid enthält, aufgebaut durch ein Endstück der Schlauchverbindung (4, 8, 13, 24, 34, 36, 42, 46, 53), das in das Innere des starren Endes (1, 10, 16, 19, 30, 35, 40, 45, 50) eingeführt ist, wobei die Wand der Schlauchverbindung, die im Betrieb dem Druck des Fluides auf seiner Innenfläche ausgesetzt ist, über seine Außenfläche im Dichtkontakt mit der Innenfläche des starren Endes ist, dadurch **gekennzeichnet**, daß das feste Ende (35) auf seiner Innenfläche bearbeitet ist, um eine ringförmige Vertiefung (37) zu bilden, und daß die Schlauchverbindung (36) an ihrem Ende einstückig mit einem Ring (38) ausgebildet ist, welcher ein Endstück (39), das radial vorspringt in Eingriff mit der ringförmigen Vertiefung (37) aufweist, um den axialen Halt der Schlauchverbindung (36) zu gewährleisten.

7. Verbindungseinrichtung zwischen einem schlauchartigen Verbindungsteil (4, 8, 13, 24, 34, 36, 42, 46, 53) und einem starren Rohrende (1, 10, 16, 19, 30, 35, 40, 45, 50) in einem Kreislauf, der im Betrieb ein unter Druck stehendes Fluid enthält, aufgebaut durch ein Endstück der Schlauchverbindung (4, 8, 13, 24, 34, 36, 42, 46, 53), das in das Innere des starren Endes (1, 10, 16, 19, 30, 35, 40, 45, 50) eingeführt ist, wobei die Wand der Schlauchverbindung, die im Betrieb dem Druck des Fluides auf seiner Innenfläche ausgesetzt ist, über seine Außenfläche im Dichtkontakt mit der Innenfläche des starren Endes ist, dadurch **gekennzeichnet**, daß das feste Ende (40) auf seiner Außenfläche ein Endstück (41) aufweist, das radial nach außen vorspringt, und daß die Schlauchverbindung (42) einstückig auf seiner Außenfläche mit einem ringförmigen Hakenteil (43) ausgebildet ist, das mit dem vorspringenden Stück (41) zusammenwirkt, um den axialen Halt der Schlauchverbindung (42) zu gewährleisten.

8. Verbindungseinrichtung zwischen einem schlauchartigen Verbindungsteil (4, 8, 13, 24, 34, 36, 42, 46, 53) und einem starren Rohrende (1, 10, 16, 19, 30, 35, 40, 45, 50) in einem Kreislauf, der im Betrieb ein unter Druck stehendes Fluid enthält, aufgebaut durch ein Endstück der Schlauchverbindung (4, 8, 13, 24, 34, 36, 42, 46, 53), das in das Innere des starren Endes (1, 10, 16, 19, 30, 35, 40, 45, 50) eingeführt ist, wobei die Wand der Schlauchverbindung, die im Betrieb dem Druck des Fluides auf seiner Innenfläche ausgesetzt ist, über seine Außenfläche im Dichtkontakt mit der Innenfläche des starren Endes ist, dadurch **gekennzeichnet**, daß das feste Ende (45) in seinem Endbereich eine Verlängerung (47) in axialer Richtung aufweist, welche eine nach innen gerichtete radiale Krempe (47a) aufweist, und daß die Schlauchverbindung (46) ein radial vorspringendes Teil (46a) aufweist, das mit der Krempe (47a) zusammenwirkt, um den axialen Halt der Schlauchverbindung (46) zu gewährleisten.

9. Verbindungseinrichtung zwischen einem schlauchartigen Verbindungsteil (4, 8, 13, 24, 34, 36, 42, 46, 53) und einem starren Rohrende (1, 10, 16, 19, 30, 35, 40, 45, 50) in einem Kreislauf, der im Betrieb ein unter Druck stehendes Fluid enthält, aufgebaut durch ein Endstück der Schlauchverbindung (4, 8, 13, 24, 34, 36, 42, 46, 53), das in das Innere des starren Endes (1, 10, 16, 19, 30, 35, 40, 45, 50) eingeführt ist, wobei die Wand der Schlauchverbindung, die im Betrieb dem Druck des Fluides auf seiner Innenfläche ausgesetzt ist, über seine Außenfläche im Dichtkontakt mit der Innenfläche des starren Endes ist, dadurch **gekennzeichnet**, daß das feste Ende (50) außen bearbeitet ist, um eine ringförmige Vertiefung (51) zu bilden, die durch eine radiale Krempe (52) begrenzt ist, daß die Schlauchverbindung (53) ein radial nach außen vorspringendes Teil (53a) aufweist und daß ein als Lamelle (55) profilierter Ring aus zwei Stücken, die durch Klemmen zusammengesetzt sind, in die Vertiefung (51) eingreift und das Teil (53a) der Schlauchverbindung (53) überdeckt, um seinen axialen Halt zu gewährleisten.

10. Einrichtung nach einem der Ansprüche 1 bis 9, dadurch gekennzeichnet, daß ein elastischer Ring (5, 12, 25, 32, 38, 44, 49, 54) in das Innere der Schlauchverbindung eingreift, um deren Deformation bei Abwesenheit von Druck in den Kreislauf zu verhindern.

**Claims**

1. Coupling device between a flexible tubular connection (4, 8, 13, 24, 34, 36, 42, 46, 53) and a rigid pipe end (1, 10, 16, 19, 30, 35, 40, 45, 50) in a circuit containing a pressurised fluid during operation, constituted by an end part of the flexible connection (4, 8, 13, 24, 34, 36, 42, 46, 53) introduced inside the rigid end (1, 10, 16, 19, 30, 35, 40, 45, 50), the wall of the flexible connection subject during operation to the pressure of the fluid on its inner surface being in liquid-tight contact, by its outer surface, with the inner surface of the rigid end, characterised by the fact that the rigid pipe connection (1) is machined on its inner surface in order to constitute an annular, radial projection (2) projecting towards the inside in order to ensure the axial retention of the flexible connection (4) in the rigid end (1) by radial deformation towards the inside of the flexible connection (4).

2. Coupling device between a flexible tubular connection (4, 8, 13, 24, 34, 36, 42, 46, 53) and a rigid pipe end (1, 10, 16, 19, 30, 35, 40, 45, 50) in a circuit containing, during operation, a pressurised fluid, constituted by an end part of the flexible connection (4, 8, 13, 24, 34, 36, 42, 46, 53) introduced inside the rigid end (1, 10, 16, 19, 30, 35, 40, 45, 50), the wall of the flexible connection subject during operation to the pressure of the fluid on its inner surface being in fluid-tight contact, by its outer surface, with the inner surface of the rigid end, characterised by the fact that the rigid end (10) is machined on its inner surface in order to constitute at least one radial, annular projection (11) intended to engage in an annular cavity (9) of corresponding shape in the wall of the flexible connection, in order to ensure its axial retention.

3. Device according to one of Claims 1 and 2, characterised by the fact that the flexible connection (13) comprises a coaxial skirt (14) surrounding the flexible connection intended to come into position around the rigid end (16) to which the skirt (14) is fixed by a hose clip (18).

4. Device according to one of Claim 1 and 2, characterised by the fact that the rigid end (19) comprises an end part constituted by small tongues (21), which are able to deform by bending, comprising internally locking notches (22) and a eliding ring (26) able to move between a position locking the tongues (21) radially and a position releasing the tongues, which are then spaced apart with respect to each other, in order to facilitate the introduction of the flexible connection (24) into the rigid end (19).

5. Coupling device between a flexible tubular connection (4, 8, 13, 24, 34, 36, 42, 46, 53) and a rigid pipe end (1, 10, 16, 19, 30, 35, 40, 45, 50) in a circuit containing, during operation, a pressurised fluid, constituted by an end port of the flexible connection (4, 8, 13, 24, 34, 36, 42, 46, 53) introduced inside the rigid end (1, 10, 16, 19, 30, 35, 40, 45, 50), the wall of the flexible connection subject, during operation, to the pressure of the fluid on its inner surface being in fluid-tight contact, by its outer surface, with the inner surface of the rigid end, characterised by the fact that the rigid end (30) is machined on its inner surface in order to constitute an annular cavity (31) and that the flexible connection (34) comprises an annular bead (33) engaged in the annular cavity (31) in order to ensure its axial retention.

6. Coupling device between a flexible tubular connection (4, 8, 13, 24, 34, 36, 42, 46, 53) and a rigid pipe end (1, 10, 16, 19, 30, 35, 40, 45, 50) in a circuit containing, during operation, a pressurised fluid, constituted by an end part of the flexible connection (4, 8, 13, 24, 34, 36, 42, 46, 53) introuced inside the rigid end (1, 10, 16, 19, 30, 35, 40, 45, 50), the wall of the flexible connection subject during operation to the pressure of the fluid on its inner surface being in liquid-tight contact, by its outer surface, with the inner surface of the rigid end, characterised by the fact that the rigid end (35) is machined on its inner surface in order to constitute an annular cavity (37) and that the flexible connection (36) is integral it its end with a ring (38) comprising an end part (39) projecting radially and engaged in the annular cavity (37) in order to ensure the axial retention of the flexible connection (36).

7. Coupling device between a flexible tubular connection (4, 8, 13, 24, 34, 36, 42, 46, 53) and a rigid pipe end (1, 10, 16, 19, 30, 35, 40, 45, 50) in a circuit containing, durig operation, a pressurised fluid, constituted by an end part of the flexible connection (4, 8, 13, 24, 34, 36, 42, 46, 53) introduced inside the rigid end (1, 10, 16, 19, 30, 35, 40, 45, 50), the wall of the flexible connection subject during operation to the pressure of the fluid on its inner surface being in fluid-tight contact, by its outer surface, with the inner surface of the rigid end, characterised by the fact that the rigid end (40) comprises on its outer surface, an end part (41) projecting radially outwards and that the flexible connection (42) is integral on its outer surface with an annular hooking member (43) cooperating with the projecting part (41) in order to ensure the axial retention of the flexible connection (42).

8. Coupling device between a flexible tubular connection (4, 8, 13, 24, 34, 36, 42, 46, 53) and a rigid pipe end (1, 10, 16, 19, 30, 35, 40, 45, 50) in a circuit containing, during operation, a pressurised fluid, constituted by an end part of the flexible connection (4, 8, 13, 24, 34, 36, 42, 46, 53) introduced inside the rigid end (1, 10, 16, 19, 30, 35, 40, 45, 50), the wall of the flexible connection subject during operation to the pressure of the fluid on its inner surface being in fluid-tight contact, by its outer surface, with the inner surface of the rigid end, characterised by the fact that the rigid end (45) comprises at its end an extension (47) of axial direction comprising a radial rim (47a) directed towards the inside and that the flexible connection (46) comprises a part (46a) projecting radially and cooperating with the rim (47a) in order to ensure the axial retention of the flexible connection (46).

9. Coupling device between a flexible tubular connection (4, 8, 13, 24, 34, 36, 42, 46, 53) and a rigid pipe end (1, 10, 16, 19, 30, 35, 40, 45, 50) in a circuit containing, during operation, a pressurised fluid, constituted by an end part of the flexible connection (4, 8, 13, 24, 34, 36, 42, 46, 53) introduced inside the rigid end (1, 10, 16, 19, 30, 35, 40, 45, 50), the wall of the flexible connection subject during operation to the pressure of the fluid on its inner surface being in fluid-tight contact, by its outer surface, with the inner surface of the rigid end, characterised by the fact that the rigid end (50) is machined externally in order to constitute an annular cavity (51) defined by a radial rim (52), that the flexible connection (53) comprises a part (53a) projecting radially outwards and that a ring profiled in the form of a rider (55) in two parts assembled by clipping is engaged in the cavity (51) and covers the part (53a) of the flexible connection (53) in order to ensure its axial retention.

10. Device according to one of Claims 1 to 9, characterised by the fact that a resilient ring (5, 12, 25, 32, 38, 44, 49, 54) is engaged inside the flexible connection in order to prevent its deformation in the absence of pressure in the circuit.

FIG.1

FIG.2

FIG.3

FIG.4A

FIG.4

FIG.4B

FIG.5

FIG.6

FIG.7

FIG.8A

FIG.8

FIG.9A

FIG.9

EP 0 338 880 B1